# EUROPÄISCHE PATENTANMELDUNG

(11) **EP 2 905 462 A2**
(43) Veröffentlichungstag der Anmeldung: **12.08.2015**
(21) Anmeldenummer: 14004247.4
(22) Anmeldetag: 17.12.2014
(51) Int. Cl.: F02N 11/04, F02N 11/08, B60L 11/08

(54) **Verfahren zur Inbetriebsetzung einer Brennkraftmaschine eines Generatorsatzes eines elektrischen Energieverteilungssystems an Bord eines Schiffes**

(30) Priorität: 21.12.2013 DE 102013021838
(71) Anmelder: Andersen, Peter, 21075 Hamburg (DE)
(72) Erfinder: Andersen, Dipl.-Ing. Peter, 21075 Hamburg (DE); Krahe, Michael, 21073 Hamburg (DE)
(74) Vertreter: Lelgemann, Karl-Heinz

(57) **Zusammenfassung**

Um bei einem Verfahren zur Inbetriebsetzung einer Brennkraftmaschine (7) eines Generatorsatzes (9) eines elektrischen Energieverteilungssystems (1) an Bord eines Schiffes Vorteile hinsichtlich des Energieeinsatzes sowie der Flexibilität und Anpassbarkeit an unterschiedliche Leistungsanforderungen zu erreichen, wird vorgeschlagen, dass die Brennkraftmaschine (7) in Betrieb gesetzt wird, indem ein Generator (6) des Generatorsatzes (9) mittels eines Stromrichters (5) als Elektromotor betrieben und die Brennkraftmaschine (7) mittels des als Elektromotor arbeitenden Generators (6) auf ihre Zünddrehzahl gebracht wird.

## Beschreibung

Die Erfindung bezieht sich auf ein Verfahren zur Inbetriebsetzung einer Brennkraftmaschine eines Generatorsatzes eines elektrischen Energieverteilungssystems an Bord eines Schiffes.

Bei aus dem Stand der Technik bekannten elektrischen, insbesondere dieselelektrischen Energieverteilungssystemen an Bord von Schiffen wird vom sog. Lastmanagement des elektrischen Energieverteilungssystems bei einem erhöhten Leistungsbedarf, d.h., wenn die aktuelle Lastanforderung im elektrischen Energieverteilungssystem z.B. höher als 80 % der verfügbaren Leistung liegt, ein Startbefehl an einen weiteren Generatorsatz des elektrischen Energieverteilungssystems gegeben, wobei dieser weitere Generatorsatz üblicherweise aus einer Brennkraftmaschine, z.B. einem Dieselmotor, und einem elektrischen Generator besteht. Von einem diesem Generatorsatz zugeordneten Steuergerät wird nun die Brennkraftmaschine dieses Generatorsatzes über eine Anlassvorrichtung, die bei kleineren Dieselmotoren üblicherweise elektrisch und bei größeren Dieselmotoren üblicherweise pneumatisch ausgebildet ist, auf ihre Zünddrehzahl gebracht und darauf folgend, sobald sie dann ihre Nenndrehzahl erreicht hat, wird der Generatorsatz einem Schiffsnetz des elektrischen Energieverteilungssystems zugeschaltet. Sinkt die Lastanforderung an die Generatorsätze für einen vergleichsweise langen Zeitraum deutlich unter die verfügbare Leistung, z.B. deutlich unter 80 % der verfügbaren Leistung für einen Zeitraum von mindestens fünf Minuten, wird einer der in Betrieb befindlichen Generatorsätze des elektrischen Energieverteilungssystems außer Betrieb gesetzt.

Beim Betrieb derartiger elektrischer Energieverteilungssysteme soll erreicht werden, dass die Dieselmotoren jederzeit mit einer möglichst hohen Auslastung betrieben werden, da hier der spezifische Brennstoffverbrauch der Dieselmotoren am geringsten und damit am wirtschaftlichsten ist. Andererseits soll die Anzahl der Startvorgänge der Dieselmotoren minimiert werden, da insbesondere elektrische Anlassvorrichtungen nur für eine begrenzte Anzahl von Startvorgängen ausgelegt sind und da pneumatische Anlassvorrichtungen üblicherweise nur über einen sehr begrenzten Vorrat an Startluft verfügen, wobei die Auffüllung dieses Vorrats ein vergleichsweise langwieriger und mit einem erheblichen Aufwand einhergehender Prozess ist.

Die Parameter der Ein- und Abschaltgrenzen von Generatorsätzen werden im Lastmanagement bekannter derartiger elektrischer Energieverteilungssysteme also so gewählt, dass ein Kompromiss aus möglichst guter Auslastung der Generatorsätze einerseits und möglichst wenigen Startvorgängen der Dieselmotoren andererseits erreicht wird.

Es sei noch angemerkt, dass der Startvorgang eines aus Dieselmotor und elektrischem Generator bestehenden Generatorsatzes vom Startbefehl bis zur Zuschaltung ca. zehn bis zwanzig Sekunden dauert, wenn das elektrische Energieverteilungssystem über einen Gleichspannungszwischenkreis verfügt; bei elektrischen Energieverteilungssystemen, die mit Drehstromkreisen etc. realisiert sind, ist dieser Zeitraum zwischen Startbefehl und Zuschaltung deutlich länger, da noch eine Synchronisation des elektrischen Generators mit dem Drehstromnetz erforderlich ist.

Ausgehend von dem vorstehend geschilderten Stand der Technik liegt der Erfindung die Aufgabe zugrunde, den Aufwand für die In- und Außerbetriebsetzung von Generatorsätzen zu reduzieren und hierdurch die Energieeffizienz des elektrischen Energieverteilungssystems zu verbessern.

Diese Aufgabe wird erfindungsgemäß dadurch gelöst, dass die Brennkraftmaschine eines Generatorsatzes des elektrischen Energieverteilungssystems an Bord eines Schiffes in Betrieb gesetzt wird, indem ein elektrischer Generator des Generatorsatzes mittels eines Stromrichters als Elektromotor betrieben und die Brennkraftmaschine mittels des als Elektromotor arbeitenden Generators auf ihre Zünddrehzahl gebracht wird. Hierdurch wird bei den meisten Inbetriebsetzungsvorgängen der Betrieb einer Anlassvorrichtung überflüssig. Der begrenzende Faktor für die Anzahl der Inbetriebsetzungen von Brennkraftmaschinen entfällt somit, da die Brennkraftmaschine bzw. der Dieselmotor selbst hinsichtlich der Anzahl der Inbetriebsetzungsvorgänge nicht begrenzt ist, wobei natürlich vorausgesetzt wird, dass die Brennkraftmaschine bzw. der Dieselmotor vorgewärmt und geschmiert ist, was üblicherweise bei derartigen elektrischen Energieverteilungssystemen der Fall ist. Beim erfindungsgemäßen Verfahren können die Parameter für die Zu- und Abschaltung der Generatorsätze im Lastmanagement angepasst werden; entsprechend können die für die Inbetriebsetzung erforderlichen Zeiträume erheblich verkürzt sowie die Ein- und Abschaltgrenzen erheblich knapper und an die Energieeffizienz angepasster gewählt werden. Hierdurch ergeben sich folgende vorteilhafte Effekte:
- Laufende elektrische Generatoren müssen bei häufigen Lastwechseln nicht mehr im ineffizienten Bereich betrieben werden, da die Kombination, z.B. unterschiedlich dimensionierter, laufender Generatorsätze schneller an die jeweils aktuelle Lastanforderung angepasst werden könnte;
- bei kurzzeitigen geringeren Lastanforderungen, z.B. Wartezeiten, lohnt es sich, nicht benötigte Generatorsätze auch kurzzeitig außer Betrieb zu setzen und somit direkt Brennstoff zu sparen. Dies hat darüber hinausgehend zur Folge, dass die noch laufenden Generatorsätze wirtschaftlicher betrieben werden können, da sie in einem effizienteren Betriebsbereich arbeiten können;
- da elektrische bzw. pneumatische Anlassvorrichtungen weitaus seltener benötigt werden, entfällt diesbezüglich ein erheblicher Aufwand für Wartungsarbeiten. Die Verfügbarkeit des elektrischen Energieverteilungssystems wird erhöht, weil beispielsweise der Ausfall einer Anlassvorrichtung die Nutzbarkeit des ihr zugeordneten Generatorsatzes nicht mehr beeinflusst. Bei einem Ausfall der einem Generatorsatz zugeordneten Anlassvorrichtung geht lediglich die Schwarzstartfähigkeit dieses Generatorsatzes verloren. Solange das elektrische Energieverteilungssystem als Ganzes in Betrieb bleibt und nicht ausfällt, kann der Generatorsatz trotz Ausfalls der ihm zugeordneten Anlassvorrichtung eingesetzt werden.

Für den elektrischen Generator ist die Inbetriebsetzung der Brennkraftmaschine bzw. des Dieselmotors mit keinen besonderen Schwierigkeiten einhergehend, da üblicherweise elektrische Generatoren weitaus stärker ausgelegt sind als z.B. elektrische Anlassvorrichtungen. Für die Inbetriebsetzung der Brennkraftmaschine bzw. des Dieselmotors wird entsprechend lediglich 1 % der Nennleistung des elektrischen Generators benötigt.

Darüber hinaus lässt sich erfindungsgemäß der Zeitraum zwischen Startbefehl und Lastzuschaltung erheblich verkürzen, da der elektrische Generator über ein wesentlich höheres Drehmoment verfügt als eine elektrische oder pneumatische Anlassvorrichtung, so dass die Brennkraftmaschine bzw. der Dieselmotor schneller auf ihr bzw. seine Zünddrehzahl gebracht werden kann.

Gemäß einer vorteilhaften Weiterbildung des erfindungsgemäßen Verfahrens wird der als Elektromotor fungierende Generator aus einem vom zumindest zwei, vorzugsweise mehrere Generatorsätze aufweisenden elektrischen Energieverteilungssystem versorgten elektrischen Schiffsnetz mit elektrischer Energie versorgt. Hierdurch ist bei in Betrieb befindlichem elektrischen Energieverteilungssystem mit einem im Vergleich zum Stand der Technik erheblich geringeren Aufwand ein häufiges Zu- und Abschalten eines Generatorsatzes möglich.

Alternativ ist es möglich, den als Elektromotor fungierenden Generator über einen Landanschluss mit elektrischer Energie zu versorgen, wobei der Landanschluss hierbei auch das Schiffsnetz mit elektrischer Energie versorgt und der als Elektromotor fungierende Generator über das Schiffsnetz an den Landanschluss angeschlossen ist.

Gemäß einer weiteren vorteilhaften Weiterbildung des erfindungsgemäßen Verfahrens wird die Brennkraftmaschine mittels des als Elektromotor arbeitenden elektrischen Generators auf eine Drehzahl gebracht, die zumindest der Zünddrehzahl und maximal der Nenndrehzahl der Brennkraftmaschine entspricht. Hierdurch kann anforderungsgerecht der Zeitraum für eine Zuschaltung eines Generatorsatzes weiter reduziert werden.

Wenn als Stromrichter für den zur Inbetriebsetzung der Brennkraftmaschine als Elektromotor arbeitenden Generator ein den Generator mit einem Gleichspannungszwischenkreis des Schiffsnetzes verbindender bidirektionaler Stromrichter eingesetzt wird, ist der elektrische Generator, ohne dass der Einsatz weiterer Bauteile erforderlich wäre, als Elektromotor betreibbar.

Sofern das erfindungsgemäße Verfahren bei elektrischen Energieverteilungssystemen mit Drehstromnetzen eingesetzt wird, kann als Stromrichter für den zur Inbetriebsetzung der Brennkraftmaschine als Elektromotor arbeitenden Generator ein ausschließlich für den Inbetriebsetzungsvorgang der Brennkraftmaschine zugeschalteter kleiner, vorzugsweise unidirektionaler Stromrichter eingesetzt werden.

Um die Energieeffizienz des vorstehend geschilderten erfindungsgemäßen elektrischen Energieverteilungssystems weiter zu verbessern, wird ein Verfahren für den Betrieb einer Brennkraftmaschine eines Generatorsatzes eines elektrischen Energieverteilungssystems an Bord eines Schiffes vorgeschlagen, bei dem für die Temperatur des Abgases im Abgaszug der Brennkraftmaschine ein Mindestniveau vorgegeben wird und bei dem bei Erreichen bzw. Unterschreiten dieses Mindestniveaus die Drehzahl der Brennkraftmaschine reduziert und ein Brennstoffgehalt eines in die Brennkraftmaschine eingeführten Volumenstroms aus Luft und Brennstoff erhöht werden. Durch die Vorgabe einer Mindesttemperatur im Abgaszug der Brennkraftmaschine wird dort eine Rußbildung vermieden. Da sich kein Ruß bildet, kann auch ein Zusetzen des im Abgaszug vorgesehenen Filters durch Ruß zuverlässig verhindert werden. Durch diese Maßnahme ergeben sich auch Verbesserungen beim Betrieb des bei derartigen Brennkraftmaschinen üblicherweise vorgesehenen Turboladers.

Irgendwelche zusätzlichen technischen Maßnahmen im Abgaszug der Brennkraftmaschine, die bei aus dem Stand der Technik bekannten entsprechenden Brennkraftmaschinen vorgesehen sind, z.B. eine Nachverbrennung im Abgaszug, können im Falle des erfindungsgemäß weitergebildeten Verfahrens vollständig entfallen. Durch eine entsprechende Anpassung in Betrieb befindlicher derartiger Brennkraftmaschinen mit dem vorstehend geschilderten Verfahren kann darüber hinaus auf eine ansonsten bei entsprechenden Änderungen des Anforderungsprofils erforderliche Nachrüstung derartiger Brennkraftmaschinen mit aus dem Stand der Technik bekannten Nachverbrennungsstufen verzichtet werden.

Um für den Fall, dass die Brennkraftmaschine zur Erhöhung der Temperatur im Abgaszug hinsichtlich ihrer Drehzahl reduziert worden ist, möglichst schnell wieder den Normalbetrieb der Brennkraftmaschine zu erreichen, wird vorgeschlagen, dass entsprechend dem Anstieg der Temperatur des Abgases im Abgaszug der Brennkraftmaschine über ein oberhalb des Mindestniveaus vorgegebenes Schwellniveau hinaus die Drehzahl der Brennkraftmaschine wieder erhöht und der Brennstoffgehalt des in die Brennkraftmaschine eingeführten Volumenstroms aus Luft und Brennstoff reduziert werden.

Im Folgenden wird die Erfindung anhand von Ausführungsformen unter Bezugnahme auf die Zeichnung näher erläutert.

Es zeigen:
- Figur 1: eine prinzipielle Darstellung einer ersten Ausführungsform eines elektrischen Energieverteilungssystems an Bord eines Schiffes, bei dem das erfindungsgemäße Verfahren zur Inbetriebsetzung einer Brennkraftmaschine eines Generatorsatzes des elektrischen Energieverteilungssystems zum Einsatz kommt; und
- Figur 2: eine zweite Ausführungsform eines Schiffsnetzes, bei der das erfindungsgemäße Verfahren zum Einsatz kommt.

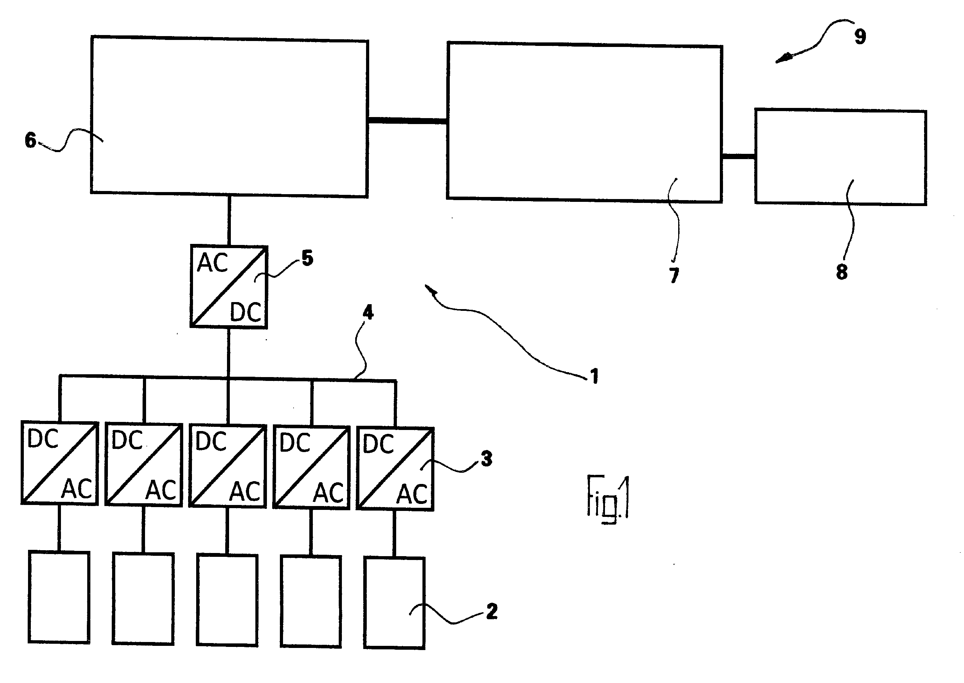

Ein in Figur 1 prinzipiell dargestelltes elektrisches, vorzugsweise dieselelektrisches Energieverteilungssystem 1 an Bord eines Schiffes ist an ein elektrisches Schiffs- bzw. Bordnetz mit Verbrauchern 2 angeschlossen.

Die Verbraucher 2 werden über verbraucherseitige Stromrichter 3 aus einem Gleichspannungszwischenkreis 4 mit elektrischer Energie versorgt. Über einen erzeugerseitigen Stromrichter 5 ist der Gleichspannungszwischenkreis 4 an einen elektrischen Generator 6 angeschlossen, in dem elektrische Energie erzeugt wird, die über den erzeugerseitigen Stromrichter 5 in den Gleichspannungszwischenkreis 4 eingespeist wird und der Energieversorgung des Bordnetzes dient.

Hierzu ist der elektrische Generator 6 an eine Brennkraftmaschine angeschlossen, bei der es sich vorzugsweise um einen Dieselmotor 7 handelt. Die im Dieselmotor 7 erzeugte mechanische Energie wird durch den elektrischen Generator 6 in die in den Gleichspannungszwischenkreis 4 eingespeiste elektrische Energie umgewandelt.

Die im Falle der in Figur 1 gezeigten Ausführungsform des elektrischen Energieverteilungssystems 1 als Dieselmotor 7 ausgestaltete Brennkraftmaschine ist mit einer elektrischen oder pneumatischen Startvorrichtung 8 versehen, mittels der eine Schwarzstartfähigkeit des aus dem Dieselmotor 7 und dem elektrischen Generator 6 bestehenden Generatorsatzes 9 sichergestellt wird, d.h., dass der Generatorsatz 9 mittels dieser Startvorrichtung 8 auch bei völligem Ausfall bzw. Blackout des elektrischen Energieverteilungssystems 1 grundsätzlich in Betrieb setzbar bleibt.

Das in Figur 1 prinzipiell gezeigte elektrische Energieverteilungssystem 1 bzw. dessen elektrisches Netz ist an zumindest eine weitere elektrische Energiequelle angeschlossen, bei der es sich beispielsweise um einen weiteren Generatorsatz oder um einen Landanschluss handeln kann, die in Figur 1 aus Vereinfachungsgründen nicht dargestellt sind.

Im üblichen Betrieb des vorstehend geschilderten elektrischen Energieverteilungssystems 1 an Bord von Schiffen tritt vergleichsweise häufig ein möglicherweise stark schwankender Leistungsbedarf auf. Wenn beispielsweise die Lastanforderung an das elektrische Energieverteilungssystem 1 auf über 80 % der verfügbaren elektrischen Leistung ansteigt, wird an einen bisher außer Betrieb befindlichen Generatorsatz 9, der aus einem Dieselmotor 7 und einem elektrischen Generator 6 besteht, ein Startbefehl gegeben. Der außer Betrieb befindliche elektrische Generator 6 ist über den an sich erzeugerseitigen Stromrichter 5 an den Gleichspannungszwischenkreis 4 angeschlossen. Zur Verwirklichung des erfindungsgemäßen Verfahrens ist der erzeugerseitige Stromrichter 5 als bidirektionaler Stromrichter 5 ausgebildet. Entsprechend kann der elektrische Generator 6 mittels des bidirektionalen Stromrichters 5 aus dem Gleichspannungszwischenkreis 4 mit elektrischer Energie versorgt und als Elektromotor betrieben werden. Hierdurch kann der elektrische Generator 6, der nunmehr als Elektromotor betrieben wird, den Dieselmotor 7 antreiben. Dadurch, dass der Dieselmotor 7 mittels des elektrischen Generators 6, wenn dieser als Elektromotor arbeitet, angetrieben werden kann, kann der Dieselmotor 7 mittels des elektrischen Generators 6 in Betrieb gesetzt werden. Selbstverständlich ist hierbei vorausgesetzt, dass das elektrische Energieverteilungssystem über zumindest einen weiteren Generatorsatz 9 und/oder einen Landanschluss mit elektrischer Energie versorgt werden kann.

Der elektrische Generator 6 wird bei der Inbetriebsetzung des Dieselmotors 7 nicht besonders belastet, da er üblicherweise wesentlich stärker ausgelegt ist als die elektrische oder pneumatische Startvorrichtung 8. Für die Inbetriebsetzung des Dieselmotors 7 wird lediglich ca. 1 bis 2 % der Nennleistung des im Motorbetrieb arbeitenden elektrischen Generators 6 benötigt.

Entsprechend kann der Zeitraum zwischen Startbefehl und Lastzuschaltung erheblich verkürzt werden, da der elektrische Generator 6 üblicherweise über ein wesentlich höheres Drehmoment verfügt als eine elektrische oder pneumatische Anlassvorrichtung 8; somit kann der Dieselmotor 7 in einem erheblich kürzeren Zeitraum auf seine Zünd- oder sogar direkt auf seine Nenndrehzahl gebracht werden.

Sofern das elektrische Energieverteilungssystem 1, wie in Figur 1 gezeigt, einen Gleichspannungszwischenkreis 4 zur Energieverteilung aufweist, sind keine zusätzlichen Bauteile oder Komponenten nötig, um die Inbetriebsetzung von Dieselmotoren 7 über die ihnen zugeordneten elektrischen Generatoren 6 zu realisieren; lediglich bei der Programmierung der Leistungssteuerung bzw. des Lastmanagements, der Stromrichter 3, 5 sowie eines Steuergeräts der Dieselmotoren 7 müsste eine entsprechende Anpassung vorgenommen werden.

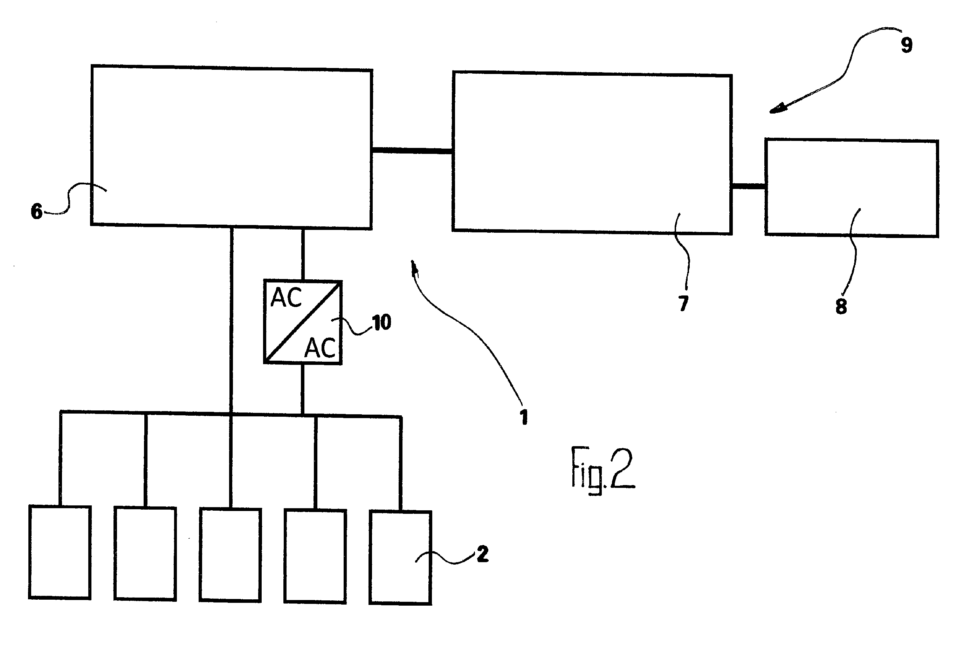

Sofern das elektrische Energieverteilungssystem 1, wie dies aus Figur 2 hervorgeht, ein Drehstromnetz aufweist, wird, um das erfindungsgemäße Verfahren verwirklichen zu können, ein zusätzlicher, vergleichsweise kleiner und vorzugsweise unidirektionaler Stromrichter 10 eingebaut bzw. verbaut. Dieser zusätzliche Stromrichter 10 wird ausschließlich dann zugeschaltet, wenn mittels des elektrischen Generators 6 der Dieselmotor 7 in Betrieb gesetzt und entsprechend der elektrische Generator 6 als Elektromotor betrieben werden soll. Hierbei muss die Leistung dieses Stromrichters 10 nicht der Nennleistung des elektrischen Generators 6 entsprechen, sondern lediglich ausreichend sein, um den Dieselmotor 7 auf dessen Zünddrehzahl zu bringen.

Um bei den Brennkraftmaschinen 7 des vorstehend geschilderten elektrischen Energieverteilungssystems die Energieeffizienz zu erhöhen und den technisch-konstruktiven Aufwand insbesondere für den der Brennkraftmaschine 7 nachgeschalteten Abgaszug zu reduzieren, wird für die Temperatur des Abgases im Abgaszug der Brennkraftmaschine 7 ein Mindestniveau vorgegeben. Wenn dieses Mindestniveau der Temperatur im Abgaszug aufgrund des sich einstellenden Betriebs der Brennkraftmaschine 7 unterschritten bzw. erreicht wird, wird die Drehzahl der Brennkraftmaschine 7 reduziert. Entsprechend erhöht sich der Brennstoffgehalt des in die Brennkraftmaschine 7 eingeführten Volumenstroms aus Luft und Brennstoff. Aufgrund des höheren Brennstoffgehalts in diesem Volumenstrom ergibt sich eine erhöhte Temperatur im Abgaszug der Brennkraftmaschine 7. Da somit ein Mindestniveau dieser Temperatur im Abgaszug der Brennkraftmaschine 7 nicht unterschritten wird, wird eine Rußbildung im Abgaszug sowie eine daraus ggf. resultierende Zusetzung von Filtern etc. zuverlässig vermieden. Um dies zu erreichen, muß keine ansonsten im Stand der Technik übliche Nachverbrennungsstufe od.dgl. vorhanden sein.

Nach einer wie vorstehend beschrieben erfolgten Reduzierung der Drehzahl der Brennkraftmaschine 7 kann, um den Betrieb der Brennkraftmaschine 7 wieder in günstigere Bereiche zu verbringen, vorgesehen sein, dass entsprechend dem Anstieg der Temperatur des Abgases im Abgaszug der Brennkraftmaschine über ein oberhalb des vorstehend geschilderten Mindestniveaus vorgegebenes Schwellniveau hinaus die Drehzahl der Brennkraftmaschine 7 wieder erhöht wird. Entsprechend wird dann der Brennstoffgehalt des in die Brennkraftmaschine eingeführten Volumenstroms aus Luft und Brennstoff reduziert.

Zwar werden im Falle des vorstehend geschilderten Verfahrens für denjenigen Zeitraum, während dem die Drehzahl der Brennkraftmaschine 7 reduziert wird, um die Temperatur im Abgaszug der Brennkraftmaschine 7 oberhalb des Mindestniveaus zu halten, Betriebsbedingungen der Brennkraftmaschine in Kauf genommen, die nicht im optimalen Betriebsbereich derselben liegen; dieser Effekt wird jedoch dadurch deutlich überkompensiert, dass eine Nachverbrennungsstufe oder vergleichbare Maßnahmen, die zu akzeptablen Verhältnissen innerhalb des Abgaszugs der Brennkraftmaschine führen könnten, völlig verzichtbar sind.

## Patentansprüche

1. Verfahren zur Inbetriebsetzung einer Brennkraftmaschine (7) eines Generatorsatzes (9) eines elektrischen Energieverteilungssystems (1) an Bord eines Schiffes, **dadurch gekennzeichnet, dass** die Brennkraftmaschine (7) in Betrieb gesetzt wird, indem ein Generator (6) des Generatorsatzes (9) mittels eines Stromrichters (5, 10) als Elektromotor betrieben und die Brennkraftmaschine (7) mittels des als Elektromotor arbeitenden Generators (6) auf ihre Zünddrehzahl gebracht wird.

2. Verfahren nach Anspruch 1, bei dem der als Elektromotor fungierende Generator (6) aus einem vom zumindest zwei, vorzugsweise mehrere Generatorsätze (9) aufweisenden elektrischen Energieverteilungssystem (1) versorgten elektrischen Schiffsnetz mit elektrischer Energie versorgt wird.

3. Verfahren nach Anspruch 1, bei dem der als Elektromotor fungierende Generator (6) über einen Landanschluss mit elektrischer Energie versorgt wird.

4. Verfahren nach einem der Ansprüche 1 bis 3, bei dem die Brennkraftmaschine (7) mittels des als Elektromotor arbeitenden Generators (6) auf eine Drehzahl gebracht wird, die zumindest der Zünddrehzahl und maximal der Nenndrehzahl der Brennkraftmaschine (7) entspricht.

5. Verfahren nach einem der Ansprüche 1 bis 4, bei dem als Stromrichter für den zur Inbetriebsetzung der Brennkraftmaschine (7) als Elektromotor arbeitenden Generator (6) ein den Generator (6) mit einem Gleichspannungszwischenkreis (4) des Schiffsnetzes verbindender bidirektionaler Stromrichter (5) eingesetzt wird.

6. Verfahren nach einem der Ansprüche 1 bis 4, bei dem als Stromrichter für den zur Inbetriebsetzung der Brennkraftmaschine (7) als Elektromotor arbeitenden Generator (6) ein ausschließlich für den Inbetriebsetzungsvorgang der Brennkraftmaschine (7) zugeschalteter kleiner, vorzugsweise unidirektionaler Stromrichter (10) eingesetzt wird.

7. Verfahren für den Betrieb einer Brennkraftmaschine (7) eines Generatorsatzes (9) eines elektrischen Energieverteilungssystems (1) an Bord eines Schiffes, dessen Brennkraftmaschine (7) vorzugsweise nach einem der Ansprüche 1 bis 6 in Betrieb setzbar ist, bei dem für die Temperatur des Abgases im Abgaszug der Brennkraftmaschine (7) ein Mindestniveau vorgegeben wird und bei dem bei Erreichen bzw. Unterschreiten dieses Mindestniveaus die Drehzahl der Brennkraftmaschine (7) reduziert und ein Brennstoffgehalt eines in die Brennkraftmaschine (7) eingeführten Volumenstroms aus Luft und Brennstoff erhöht werden.

8. Verfahren nach Anspruch 7, bei dem entsprechend dem Anstieg der Temperatur des Abgases im Abgaszug der Brennkraftmaschine (7) über ein oberhalb des Mindestniveaus vorgegebenes Schwellniveau hinaus die Drehzahl der Brennkraftmaschine (7) wieder erhöht und der Brennstoffgehalt des in die Brennkraftmaschine (7) eingeführten Volumenstroms aus Luft und Brennstoff reduziert werden.
